# EUROPEAN PATENT SPECIFICATION

(11) **EP 2 797 026 B1**
(45) Date of publication and mention of the grant of the patent: **08.08.2018**
(21) Application number: 14158533.1
(22) Date of filing: 10.03.2014
(51) Int. Cl.: G06K 7/00, G06K 7/10, G06K 19/07, G06F 3/06

(54) **Portable electronic device**
Tragbare elektronische Vorrichtung
Dispositif électronique portable

(30) Priority: 21.03.2013 JP 2013058810
(43) Date of publication of application: 29.10.2014
(73) Proprietor: Kabushiki Kaisha Toshiba, Tokyo 105-8001 (JP)
(72) Inventor: Sudou, Kiyohito, Tokyo, 105-8001 (JP)
(74) Representative: Hoffmann Eitle

(56) References cited:
- EP-A2- 0 733 987
- DE-C1- 19 523 275

## Description

### FIELD

An embodiment of this invention relates to a smart card, a portable electronic device, and a smart card processing device.

### BACKGROUND

In recent years, ultra-high speed communication (VHBR (Very High Bit Rate) communication, for example) is proposed for data communication used for a portable electronic device, such as a smart card. The ultra-high speed communication can shorten communication time required for transmission of large amount of data. On the other hand, the ultra-high speed communication may reduce communication quality because the ultra-high speed communication is easily influenced by a disturbance noise.

A conventional smart card establishes a communication speed in initial response process. Once the conventional smart card establishes communication speed, it cannot change communication speed in the middle of a communication procedure.
EP 0 733 987 A2 (TOSHOBA KK [JP]) 25 September 1996 (1996-09-25) discloses a transmission method of changing protocol and data processing
apparatus using this method. This prior art is acknowledged in the preamble of claim 1.
DE 195 23 275 C1 (ORGA KARTENSYSTEME GMBH [DE]) 12 December 1996 discloses the acceleration of communication between IC card and data exchange equipment.

### BRIEF DESCRIPTION OF THE DRAWINGS

Fig. 1 illustrates a configuration example of a smart card system which includes a smart card and a smart card processing device which concern an embodiment.
Fig. 2 is a block diagram illustrating a configuration example of the smart card concerning the embodiment.
Fig. 3 illustrates a configuration example of a format of a data block which the smart card and the smart card processing device transmit and receive which concern the embodiment.
Fig. 4 illustrates an example of a communication sequence of initial setting processing which establishes a communication of the smart card and the smart card processing device which concern the embodiment.
Fig. 5 illustrates an example of a communication sequence in the case that the smart card processing device and smart card which concern the embodiment change a communication speed.
Fig. 6 is a flow chart for explaining a flow of processing which performs change of the communication speed in the smart card concerning the embodiment.
Fig. 7 is a flow chart for explaining a flow of processing which performs change of the communication speed in the smart card processing device concerning the embodiment.
Fig. 8 illustrates an example of a communication sequence in the case an error occurs while the smart card processing device and smart card which concern the embodiment perform ultra-high-speed communication.
Fig. 9 is a flow chart for explaining a flow of error processing at the time of the ultra-high-speed communication in the smart card concerning the embodiment.
Fig. 10 is a flow chart for explaining a flow of error processing at the time of the ultra-high-speed communication in the smart card processing device concerning the embodiment.

### DETAILED DESCRIPTION

According to an embodiment, a smart card includes a communication section and a control section. The communication section communicates with the external device. The control section sets up a first speed as the communication speed used for communication with the external device by the communication section. Moreover, the control section changes the communication speed from the first speed set up to a second speed specified by a change request when the control section receives the change request of the communication speed from the external device by the communication section.

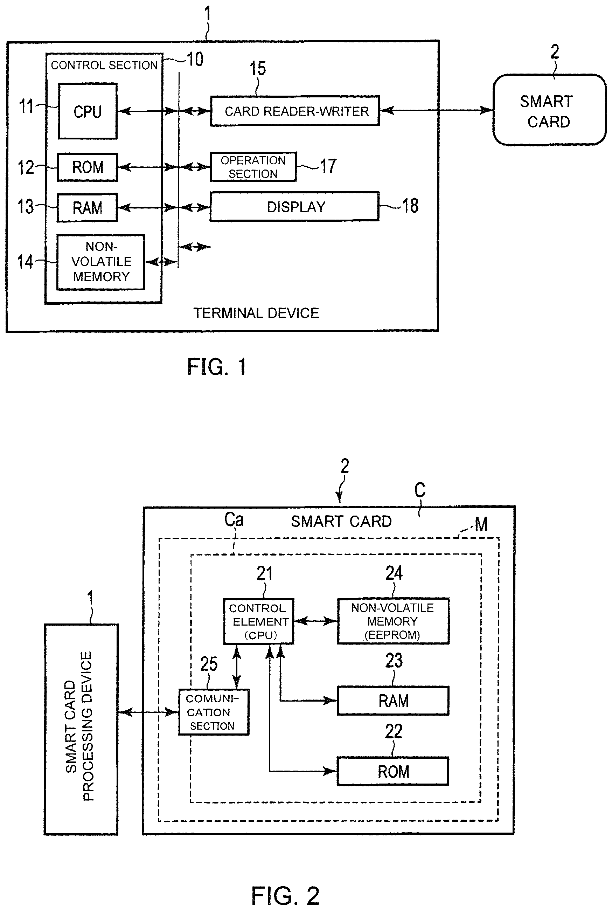

Hereinafter, an embodiment is explained with reference to the drawings. Fig. 1 is a block diagram for explaining a configuration of a smart card system. The smart card system includes a smart card 2 as a portable electronic device, and a smart card processing device 1 as an external device which performs communication with the smart card 2.

The smart card 2 is the portable electronic device which processes a command given from the external device and outputs a processing result thereof as a response. In the embodiment described below, the smart card 2 shall be mainly a noncontact type smart card. The smart card 2 as a noncontact type smart card supposed in this embodiment conforms to ISO/IEC 14443-4 which is an international standard, for example. However, this embodiment can be applied to a portable electronic device which can perform data communication with an external device, and does not limit a scope of applications to the noncontact type smart card. This embodiment is applicable to a contact type smart card etc. for example.

First, a configuration of the smart card processing device 1 is explained. In a configuration example shown in Fig. 1, the smart card processing device 1 has a control section 10, a card reader-writer 15, an operation section 17, and a display 18. The control section 10 has a CPU 11, an ROM 12, an RAM 13, and a nonvolatile memory 14. The control section 10 may be configured by a personal computer (PC), for example. The CPU 11, the ROM 12, the RAM 13, the nonvolatile memory 14, the card reader-writer 15, the operation section 17, and the display 18 are mutually connected via a bus, respectively.

The CPU 11 manages control of the smart card processing device 1 whole. The CPU 11 performs various processing by executing a control program stored in the ROM12 or the nonvolatile memory 14. The CPU 11 performs transmission and reception of a command and a response with the smart card 2 via the card reader-writer 15, for example.

The ROM 12 is a nonvolatile memory which stored a control program, control data, etc. beforehand. The RAM 13 is a volatile memory which performs as a working memory. The RAM 13 stores temporarily data which the CPU 11 is processing. The RAM 13 stores temporarily data which are transmitted and received to and from the external device via the card reader-writer 15, for example. Moreover, the RAM 13 stores temporarily the program which the CPU 11 executes.

The nonvolatile memory 14 is configured by a rewritable nonvolatile memory, such as EEPROM etc., for example. The nonvolatile memory 14 stores a control program, control data, application, and data used for the application, for example.

The card reader-writer 15 is an interface device for performing communication with the smart card 2. The card reader-writer 15 is configured by an interface according to a communication method of the smart card 2. When the smart card 2 is the noncontact type smart card, the card reader-writer 15 is configured by an antenna, a communication control section, etc. for performing wireless communication with the smart card 2.

The card reader-writer 15 has a speed register, for example, and a communication speed is determined according to a value set to the speed register. The communication speed is chosen from an initial communication speed X1, an initial communication speed X2, an initial communication speed X4, an initial communication speed X8, etc., for example according to the value set to the speed register.

The card reader-writer 15 corresponding to the noncontact type smart card is configured so as to perform an electric power supply, a clock supply, a reset control, and transmission and reception of data, to the smart card 2, The card reader-writer 15 performs activation (starting) of the smart card 2, transmission of various commands, reception of a response to the command, etc. based on control of the CPU 11 of the control section 10 by those functions.

In the case that the smart card 2 is a contact type smart card, the card reader-writer 15 has a contact section for physically and electrically connecting with a contact section of the smart card 2, and performs electric power supply, clock supply, reset control, and transmission and reception of data via the contact section of the card reader-writer 15 to the smart card 2.

Various operation instructions are inputted into the operation section 17 by the operator of the smart card processing device 1. The operation section 17 transmits data of operation instruction inputted by the operator to the CPU 11. The operation section 17 is a keyboard, a numeric keypad, a touch panel, etc., for example. The display 18 is a device which displays various kind of information by control of the CPU 11. The display 18 is a liquid crystal display device, for example.

Next, the smart card 2 is explained. The smart card 2 is activated (the smart card is in a state where it can operate)by receiving supply of electric power etc. from a higher level device, such as the smart card processing device 1. When the smart card 2 is connected with the smart card processing device 1 by contact type communication, that is, the smart card 2 is a contact type smart card, for example, the smart card 2 is activated by receiving an operation power and an operation clock from the smart card processing device 1 via the contact section as the communication interface.

Moreover, when the smart card 2 is connected with the smart card processing device 1 by a noncontact type communication method, that is, the smart card 2 is a non-contact type smart card, the smart card 2 receives an electric wave from the smart card processing device 1 via an antenna, a modulation and demodulation circuit, etc. as a communication interface, generates an operation electric power and an operation clock from the electric wave by a power source section thereof which is not illustrated, and is activated.

Next, a configuration example of the smart card 2 is explained. Fig. 2 is a block diagram schematically illustrating a configuration example of the smart card 2 concerning the embodiment. The smart card 2 includes a main body C of a shape of a card formed by a plastic etc., and a module M built in the main body C. The module M is formed in one, where one or more IC chips Ca and the external interface (communication interface) as the communication section are connected, and the module M is buried in the main body C of the smart card 2.

In the configuration example shown in Fig. 2, the smart card 2 includes a CPU 21, an ROM 22, an RAM 23, a nonvolatile memory 24, and a communication section 25. These are connected each other via a data bus. Moreover, the CPU 21, the ROM 22, the RAM 23, and the nonvolatile memory 24 are constituted by one or more IC chips Ca, and the IC chip Ca and the communication section 25 constitute the module M, where both are connected.

The CPU 21 performs as a control section which manages control of the smart card 2 whole. The CPU 11 performs various processing based on a control program and control data stored in the ROM 22 or the nonvolatile memory 24. The CPU 21 performs various processing according to an operation control of the smart card 2 or an operation form of the smart card 2 by executing the program stored in the ROM 22, for example. In addition, a part of various kinds of functions may be realized by a hardware circuit. In this case, the CPU 21 controls the function performed by the hardware circuit.

The ROM 22 is a nonvolatile memory. A control program, control data, etc. conforming to a specification of the smart card 2 are built into the ROM 22 in a manufacturing step.

The RAM 23 is a volatile memory. The RAM 13 stores temporarily data which the CPU 11 is processing. The RAM 23 performs as a buffer for calculation, a buffer for reception, and a buffer for transmission, for example. The buffer for calculation holds temporarily results of various operation processing which the CPU 21 performs. The buffer for reception holds command data which was received from the smart card processing device 1 via the communication section 25.
The buffer for transmission holds response data to transmit to the smart card processing device 1 via the communication section 25. In addition, the RAM 23 stores an operating status, such as the communication speed immediately before.

The nonvolatile memory 24 is structured by a rewritable nonvolatile memory, such as EEPROM, a flash ROM etc., for example. The nonvolatile memory 24 stores the control program, the application, and the various data according to the operational use of the smart card 2. In the nonvolatile memory 24, the control program, various data, etc. are written in a program file, a data file, etc., for example.

The communication section 25 is an interface for performing communication with the card reader-writer 15 of the smart card processing device 1. In the smart card 2 which is a noncontact type smart card, the communication section 25 performs wireless communications with the card reader-writer 15 of the smart card processing device 1, and the communication section 25 is configured by a communication control section, such as a modulation and demodulation circuit, and an antenna. Moreover, in the smart card 2 which is a contact type smart card, the communication section 25 is configured by a contact section which contacts physically and electrically the card reader-writer 15 of the smart card processing device 1, and a communication control section for performing transmission and reception of a signal.

The communication section 25 has a speed register, for example, and a communication speed is decided according to a value set to the speed register. The communication speed is chosen from an initial communication speed X1, an initial communication speed X2, an initial communication speed X4, an initial communication speed X8, etc., for example according to the value set to the speed register.

Next, a communication method of communication between the smart card 2 and the smart card processing device 1 is explained. The smart card 2 and the smart card processing device 1 transmit and receive data of a predetermined format. The smart card processing device 1 transmits command data of the predetermined format to the smart card 2, and the smart card 2 replies response data of the predetermined format to the smart card processing device 1. The smart card 2 and the smart card processing device 1 perform data communications with the data transmission method specified by ISO/IEC 14443-4, for example.

However, the communication method of communication between the smart card 2 as the portable electronic device, and the smart card processing devices 1 as the external device, is not limited to the data transmission method specified by ISO/IEC 14443-4, but a data transmission method which can transmits and receives data of the predetermined format and can perform error check to the transmission and reception data.

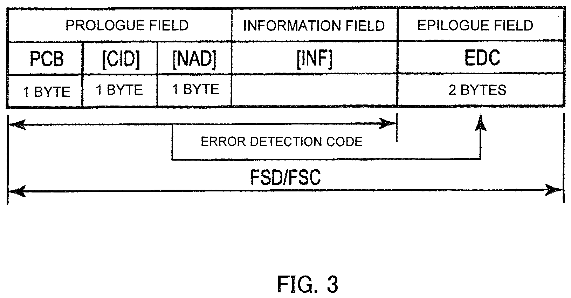

Fig. 3 shows a configuration example of a format of a data block which the smart card 2 and the smart card processing device 1 transmit and receive. Fig. 3 shows a configuration example of the data block transmitted and received with a data transmission method specified by ISO/IEC 14443-4. In the data transmission method specified by ISO/IEC 14443-4, as block transmission, the data of three kinds of formats, I-block (Information block), R-block (Receive ready block) and S-block (Supervisory block), is transmitted and received.

The I-block, the R-block and the S-block have roles different, respectively.

The I-block (I blocks) is a format for transmitting information used by application layer. The I-block is used for usual data read-out and data-writing.

The R-block (R blocks) is a format for transmitting an acknowledgement or a negative acknowledgement. As for the R-block, there are kinds of R-block of acknowledgment (ACK), R-block of negative acknowledgment (NAK), etc. The R-block of the acknowledgment (ACK) is used when a next command is required. Moreover, the R-block of the negative acknowledgment (NAK) is used when retransmission of a received command is required.

The S-block (S block) is a format for exchanging control information between the smart card 2 and the smart card processing device 1. The S-block is used as an extension demand of processing time (WTX: Waiting Time extension) and a command which makes the smart card deactivate (Deselect), for example. In addition, in the S-block, whether the S-block is the extension demand of processing time (WTX) or the command to deactivate (Deselect) is specified in a PCB which is explained below.

As shown in Fig. 3, a frame based on the block format specified by ISO/IEC14443 includes fields, such as a prologue field, an information field, and an epilogue field. All the I-block, the R-block and the S-block are based on the block format shown in Fig. 3.

The prologue field has data of Protocol Control Byte (PCB), Card IDentifier (CID), Node Address (NAD), etc.

The PCB is a protocol control byte. The PCB can transmit information required for control of data transmission to a device (an external device) of the other party. The PCB has information which shows whether this frame is the I-block, the R-block or the S-block, for example.

The CID is a card identifier. The CID is data for specifying the smart card for a processing target. In addition, the smart card 2 stores a peculiar card identifier in the ROM 26 or the nonvolatile memory 28. The NAD is a node address. The NAD is data for building a different logic connection.

INF (Information) of the information field stores a data main body of a command, application data, or state information, for example. The smart card 2 performs various processing according to the data stored in the information field. In addition, the information field may be omitted by depending on the contents of the command. The information field is omitted in the R-block.

EDC (Error Detection Code) of the epilogue field stores an error detection code, such as CRC, in order to detect abnormalities in data caused by a communication error etc., for example. The Error detection code is a value calculated based on the data of the prologue field and the information field. The device in the side of reception can detect abnormalities in data caused by the communication error and so on, based on the data in the prologue field and the information field, and the error detection code in the epilogue field of the received data. The smart card 2 which received the I-block from the smart card processing device 1 checks existence of an error by the EDC data in the epilogue field of the received I-block, for example.

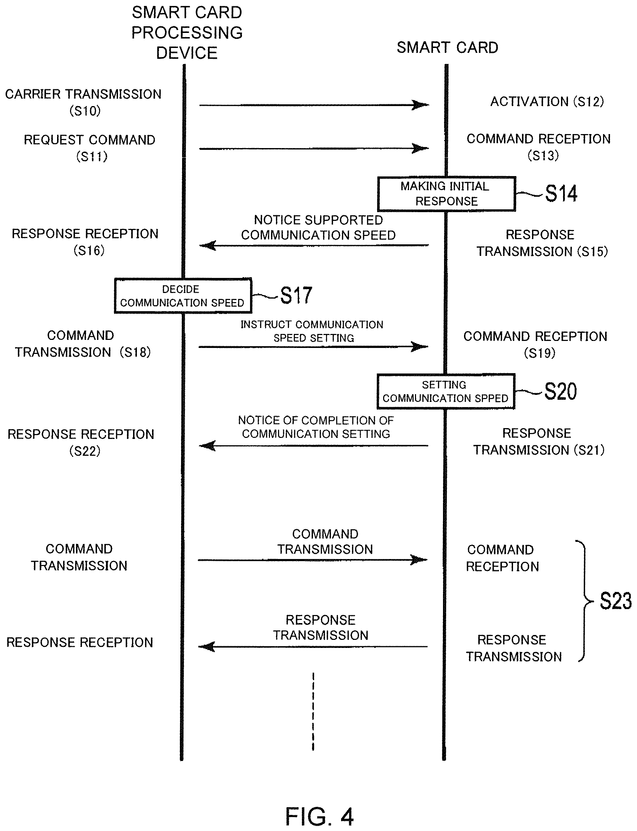

Next, a sequence of the communication between the smart card processing device 1 and the smart card 2 is explained. First, an initial setting processing which is performed after the smart card 2 starts, and in which the smart card processing device 1 and the smart card 2 establish a communication, is explained. Fig. 4 illustrates an example of a communication sequence of the initial setting processing in which the smart card 2 and the smart card processing device 1 concerning the embodiment establishes the communication. The control section 10 of the smart card processing device 1 emits a career wave for operating a smart card from the card reader-writer 15 (Step S10). The carrier wave is a non-modulated wave in single frequency, for example. This carrier wave is supplied to the smart card 2 as an electric power for operation and an operation clock.

The control section 10 of the smart card processing device 1 transmits a request command which requires an initial response to the smart card 2 by the card reader-writer 15 (Step S11). This request command is a command for performing an information transmission in order that the smart card processing device 1 and the smart card 2 establish a communication. Moreover, the request command is also a command for detecting whether a smart card which can operate exists or not in a communication area (magnetic field area) formed by the carrier wave which the card reader-writer 15 of the smart card processing device 1 emits.

The smart card processing device 1 acquires an initial response information which the smart card 2 discloses as a response (initial response) to the request command. The initial response information is fundamental device information on a smart card including information which shows the communication speed which the concerned smart card supports, for example.

The smart card 2 receives the carrier wave which the card reader-writer 15 emits with the antenna which is a part of the communication sections 25 in the communication area of the card reader-writer 15 of the smart card processing device 1. The smart card 2 generates the electric power for operation by the power source circuit which is not illustrated from the carrier wave. The power source circuit of the smart card 2 supplies the generated electric power to each part. Thereby, the smart card 2 becomes operable (Step S12).

The control element 21 of the smart card 2 which becomes operable receives the request command which the smart card processing device 1 transmits by the card reader-writer 15 with the communication section 25 (Step S13). The control element 21 of the smart card 2 analyzes the received data (command), and recognizes that the received data is a request command.

Upon recognizing that the request command is received, the control element 21 of the smart card 2 creates the initial response information as the response data to the request command (Step S14). The initial response information includes information which shows the speeds (or the maximum speed) which the relevant smart card 2 supports as a communication speed. The control element 21 transmits a response including the initial response information to the smart card processing device 1 by the communication section 25 (Step S15).

The smart card processing device 1 receives the response to the request command from the smart card 2 by the card reader-writer 15 (Step S16). The control section 10 of the smart card processing device 1 recognizes the speeds and the maximum speed which the smart card 2 supports as the communication speed from the initial response information included in the received response. The control section 10 of the smart card processing device 1 determines the speed (a first speed V1, for example)used for data communications with the smart card 2 based on the speeds and the maximum speed which the smart card 2 supports (Step S17). Upon determining the speed V1 used for communication with the smart card 2, the control section 10 of the smart card processing device 1 transmits a command which specifies the determined speed V1 and requires (directions) a communication establishment to the smart card 2 (Step S18).

The smart card 2 receives the command from the smart card processing device 1 by the communication section 25 (Step S19). The control element 21 of the smart card 2 performs a communication speed setting which sets up the speed V1 specified by the command as the communication speed with the smart card processing device (Step S20). The communication speed setting sets the value corresponding to the specified speed V1 to the speed register of the communication section 25, for example. Upon setting the value to the speed register, the control element 21 of the smart card 2 transmits a response which shows completion of setting the communication speed setting to the smart card processing device 1 (Step S21). In addition, in a following explanation, there is the case that "setting a value corresponding to a certain speed to the speed register" is expressed by expression of "changing the communication speed into a certain speed", "setting a certain speed as the communication speed", etc.

The smart card processing device 1 receives the response which shows a notice of the completion of communication speed setting from the smart card 2 by the card reader-writer 15 (Step S22). When the smart card processing device 1 receives the notice of the completion of communication speed setting from the smart card 2, the smart card processing device 1 and the smart card 2 can communicate mutually with the speed which the smart card processing device 1 specified from the speeds which the smart card 2 supports (Step S23). In this state, the smart card processing device 1 transmits a command to the smart card 2 by the set-up speed, and the smart card 2 performs processing of the received command, and transmits a response including a performed processing result to the smart card processing device 1 by the set-up speed.

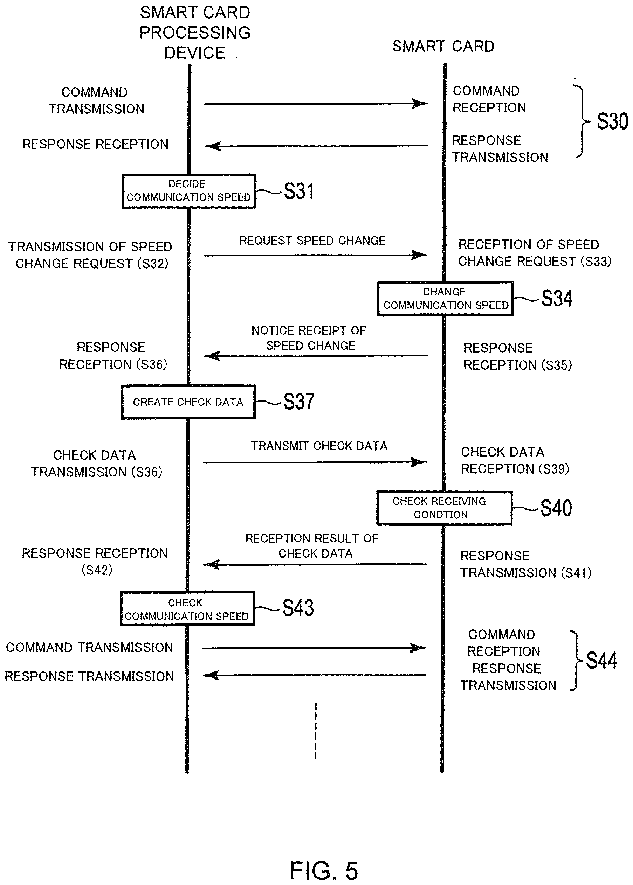

Next, speed change processing in which the smart card 2 changes a communication speed according to a instruction from the smart card processing device 1 is explained. Fig. 5 shows an example of a communication sequence in the case where the smart card processing device 1 and the smart card 2 according to this embodiment change the communication speed. Here, the smart card processing device 1 and the smart card 2 shall communicate with a first speed V1, and exchange a command and a response (Step S30). Whenever the control section 10 of the smart card processing device 1 receives the response from the smart card 2, the control section 10 of the smart card processing device 1 determines processing to carry out next. Upon determining the processing content to carry out next, the control section 10 of the smart card processing device 1 judges whether a communication speed should be changed according to the determined processing content. When the control section 10 of the smart card processing device 1 determines to change the communication speed (Step S31), the control section 10 of the smart card processing device 1 determines a speed after change (for example, a speed of ultra-high-speed communication; a second speed V2), and transmits a command which demands to change the communication speed into the determined speed V2 to the smart card 2 (Step S32).

For example, when the control section 10 of the smart card processing device 1 performs processing which transmits a large amount of data to the smart card, or when the control section 10 of the smart card processing device 1 performs processing which requires a large amount of data to the smart card 2, the control section 10 of the smart card processing device 1 shall change the communication speed to the speed of the ultra-high-speed communication (a second speed V2) (Step S31) because the control section 10 of the smart card processing device 1 wants to perform the information exchange at as high-speed as possible. Upon determining to change the communication speed into the second speed V2 from the first speed V1, the control section 10 of the smart card processing device 1 transmits a command which requires change of the communication speed into the speed V2 of the ultra-high-speed communication to the smart card 2 (Step S32).

The smart card 2 receives the command which requires change of a communication speed by the communication section 25 (Step S33). Upon receiving the command which requires change of a communication speed, the control element 21 of the smart card 21 changes the communication speed setting of the communication speed used for communication with the smart card processing device 1 to the speed (the speed V2 of the ultra-high-speed communication for, for example) specified by the received command (Step S34). That is, upon setting the value corresponding to the specified speed V2 to the speed register of the communication section 25, the control element 21 of the smart card 2 transmits a response which shows that the speed V2 specified by the command was set to the communication speed setting to the smart card processing device 1 (Step S35).

The smart card processing device 1 receives a response which shows that the communication speed was changed from the smart card 2 by the card reader-writer 15 (Step S36). Upon receiving the response which shows that the communication speed is changed, the control section 10 of the smart card processing device 1 creates a command containing check data in order to check the communication situation at the speed V2 after change (Step S37). The check data is small sized data to such an extent that the smart card 2 can check a communication situation. The check data is about several bytes of fixed data, for example. The control section 10 of the smart card processing device 1 creates a command in which the check data is stored in the information field of I-block and requires check of a communication situation. Upon creating the command containing the check data, the control section 10 of the smart card processing device 1 transmits the command at the speed V2 (Step S38).

The smart card 2 receives the command containing the check data at speed V2 by the communication section 25 (Step S39). Upon receiving the command containing the check data, the control element 21 checks the communication situation at the speed V2 after change according to the receiving situation of the concerned command (Step S40). The control element 21 of the smart card 2 transmits the receiving result (receiving situation) of the check data to the smart card processing device 1 as a response which shows a check result of the communication situation (Step S41), for example. When the control element 21 of the smart card 2 could receive the command containing the check data normally, the control element 21 of the smart card 2 transmits a response indicating that the check data have been received normally, to the smart card processing device 1, for example.

The smart card processing device 1 receives the response which includes the receiving result of check data by the card reader-writer 15 (Step S42). The control section 10 of the smart card processing device 1 checks whether the communication at the speed after change is possible based on the contents of the received response (Step S43). When the smart card processing device 1 has confirmed that the communication at the speed V2 after change is possible, the smart card processing device 1 and the smart card 2 become in the state in which the communication at the speed V2 after change is possible, and they perform exchange of a command and a response at the speed V2 after change (Step S44).

According to the above-mentioned processing, the communication speed set up by the initial setting processing can be changed during the communication processing. The communication speed can be changed to a higher speed (ultra-high-speed) when a large amount of data is transmitted and received, for example. Moreover, when changing the communication speed to the speed of the ultra-high speed, the smart card and the smart card processing device can check the communication situation which was influenced by disturbance, such as a noise from the circumference, by the check data, before actually transmitting the large amount of data. Thereby, the communication system can reduce a possibility of generation of a communication error which is caused by mismatching the changed speed to a communication situation, and which interrupts transmission and reception of data.

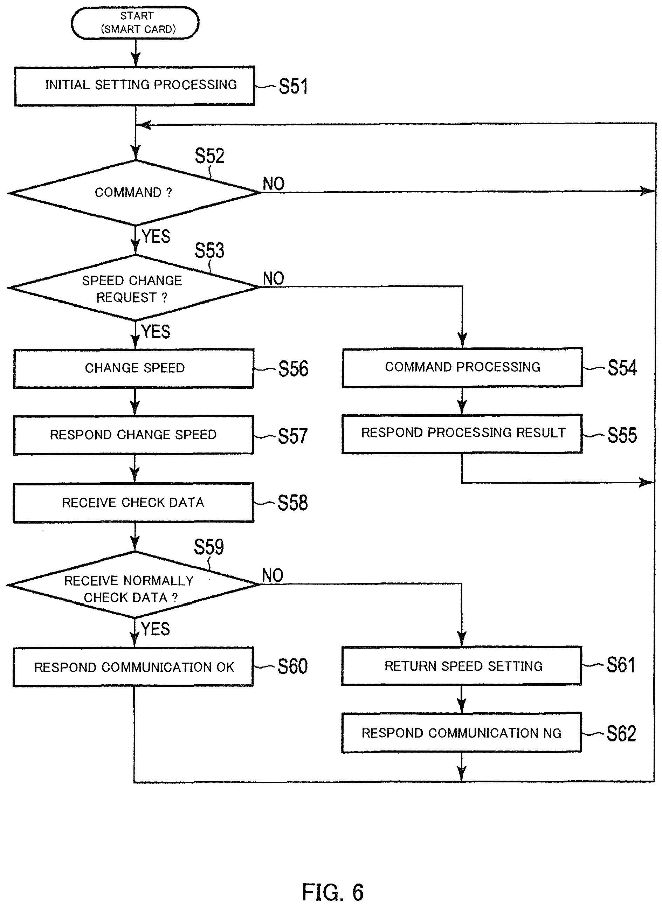

Next, an operation of the smart card 2 which performs the above mentioned change of the communication speed is explained. Fig. 6 is a flow chart for explaining a flow of the processing in the smart card 2 which performs the change of the communication speed. First, the smart card 2 receives the career wave from the smart card processing device 1, and is thereby activated. The activated control element 21 of the smart card 2 receives a request command from the smart card processing device 1 by the communication section 25, and transmits an initial response (it includes information which shows the supported speeds) to the request command. The control element 21 of the smart card 2 sets up the speed (the first speed V1, for example) specified from the smart card processing device 1 as the speed of the communication speed setting (speed register), after transmitting the initial response (Step S51).

Upon completing setting the speed V1 specified by the smart card processing device 1 to the communication speed setting (speed register), the control element 21 of the smart card 2 waits for reception of a command from the smart card processing device 1 (Step S52).

Upon receiving the command from the smart card processing device 1, the control element 21 judges whether the received command is a command which requires change of the communication speed (Step S53). When the control element 21 has judged that the received command is not a command which requires change of communication speed (Step S53, NO), the control element 21 analyzes the received command and performs command processing demanded by the receive command (Step S54). Upon performing the command processing, the control element 21 transmits a response which shows a processing result of the command processing to the smart card processing device 1 (Step S54), and waits for reception of a next command.

Moreover, when the control element 21 has judged that the received command is a command which requires change of the communication speed (Step S53, YES), the control element 21 changes the setting of the communication speed with the speed (the second speed V2, for example) specified by the command received (Step S56). Upon changing the setting of the communication speed, the control element 21 transmits a response indicating that the setting of the communication speed was changed to the smart card processing device 1 (Step S57).

After transmitting the response indicating that the setting of the communication speed was changed, the control element 21 receives a command for a communication check containing the check data at the speed V2 after change from the smart card processing device 1 (Step S58). The control element 21 judges whether the command for a communication check containing the check data has been received normally (Step S59). When the control element 21 judged that the command containing the check data has been received normally (Step S59, YES), the control element 21 responds a response indicating that the command for the communication check containing the check data has been received normally, to the smart card processing device 1 (Step S60).

Moreover, when the control element 21 judged that the command containing the check data has not been received normally (Step S59, NO), the control element 21 returns the speed of the communication speed setting to the speed V1 before change (Step S61), and transmits a response indicating that the check data has not been received normally, to the smart card processing device 1 (Step S62). In addition, the control element 21 may respond a response at the speed V2 after change, and may change the communication speed again according to the direction from the smart card processing device 1. Moreover, the control element 21 may perform first to third error processing described below as processing when the command containing the check data has not been received normally.

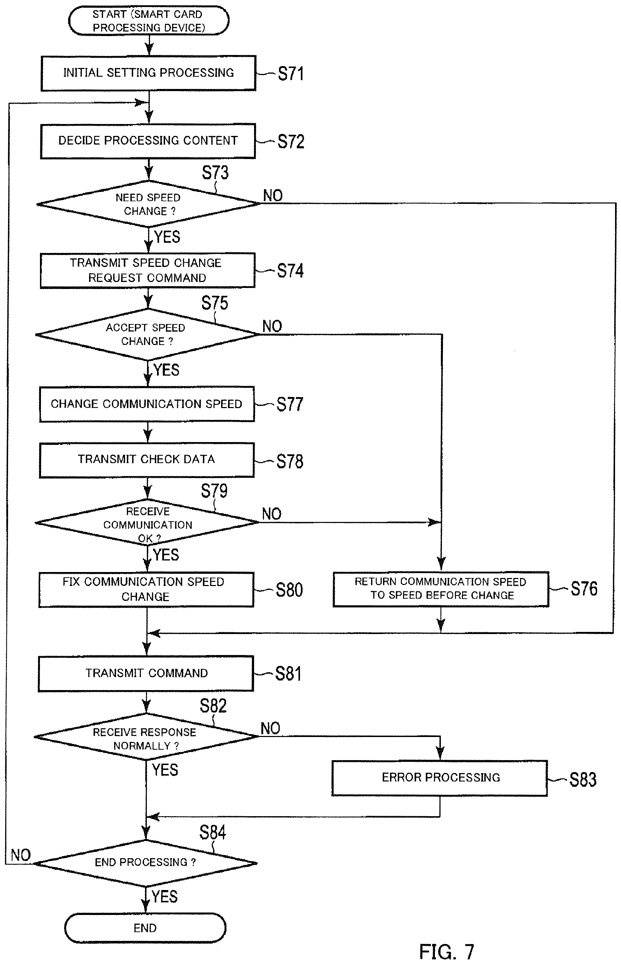

Next, an operation of the smart card processing device 1 which performs the above mentioned change of the communication speed is explained. Fig. 7 is a flow chart for explaining a flow of the processing in the smart card processing device 1 which performs the change of the communication speed. First, while emitting a career wave for activating the smart card by the card reader-writer 15, the smart card processing device 1 transmits a request command which requires the initial response from the smart card 2 which is activated by receiving the emitted career wave.

Upon receiving the initial response (it includes information which shows the speeds supported) to a request command from the smart card 2, the control section 10 of smart card processing device 1 determines the speed (the first speed V1, for example) used for communication with the smart card 2 concerned, and transmits a command which requires communication at the determined speed V1, to the smart card 2. Upon receiving a notice of completion of a setting of the communication speed setting from the smart card 2, the smart card processing device 1 can communicate with the smart card 2, and can supply a command to the smart card 2 (Step S71).

Upon becoming capable of transmitting a command, the control section 10 of the smart card processing device 1 determines processing content to perform next (Step S72). Upon determining the processing content, the control section 10 judges whether the control section 10 should change the communication speed according to the determined processing content (Step S73). When the control section 10 judges that change of communication speed is unnecessary (Step S73, NO), the control section 10 creates a command according to the determined processing content and transmits the created command to the smart card 2 (Step S81).

When the control section 10 has judged that the communication speed should be changed (Step S73, YES), the control section 10 determines a speed (the second speed V2, for example) according to the processing content. The control section 10 creates a command which requires change of the communication speed to the determined speed V2, and transmits the created command to the smart card 2 (Step S74). When the control section 10 received a response to the command which requires a speed change from the smart card 2, the control section 10 judges whether the demand of the speed change was accepted (Step S75). When the control section 10 has judged that the demand of speed change was not accepted by the smart card 2 (Step S75, NO), the control section 10 returns the communication speed to the speed V1 before change (Step S76). In this case, the control section 10 transmits the command according to the processing content at the speed V1 before change (Step S81).

Moreover, when the control section 10 has judged that the demand of speed change was accepted by the smart card 2 (Step S75, YES), the control section 10 changes the communication speed to the speed V2 after change (Step S77), and transmits a command for a communication check containing the check data mentioned above to the smart card 2 (Step S78). When the control section 10 received a response which shows normal reception to the command containing check data (Step S79, YES), the control section 10 fixes the change of the communication speed (Step S80). The control section 10 transmits a command according to the processing content to the smart card 2 at the speed V2 after change (Step S81).

Moreover, when the control section 10 could not receive a response which shows normal reception of the command containing the check data (Step S79, NO), the control section 10 returns the communication speed to the speed V1 before change (Step S76). In this case, the control section 10 transmits the command according to the processing content at the speed V1 before change (Step S81).

After transmitting the command, the control section 10 judges whether a response received from the smart card 2 shows that the command processing is processed normally (Step S82). When a series of processing to the smart card 2 does not end when the control section 10 receives a normal response (Step S82, YES), the control section 10 returns to the above-mentioned step S72, and determines a next processing content. When the control section 10 could not receive the normal response to the command (Step S82, NO), the control section 10 performs an error processing (Step S83). When a series of processing to the smart card 2 does not end after the control section 10 performs the error processing, the control section 10 returns to the above-mentioned step S72, and determines a next processing content.

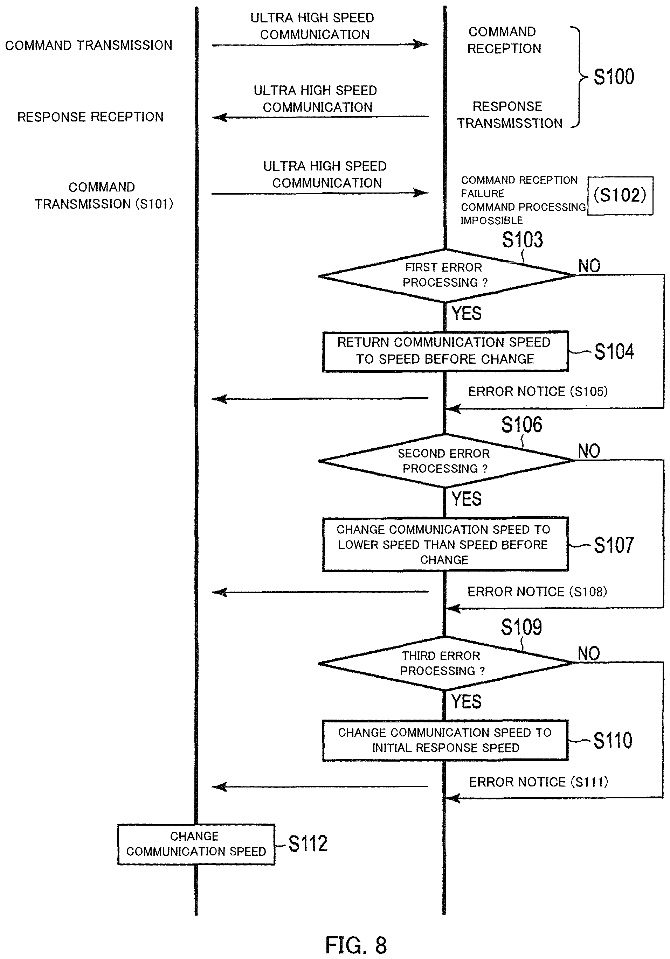

Next, processing performed when an error occurs while the smart card processing device 1 and the smart card 2 perform ultra-high-speed communication, is explained. Fig. 8 shows an example of a communication sequence performed when the error occurs while the smart card processing device 1 and the smart card 2 concerning the embodiment perform the ultra-high-speed communication. In the example shown in Fig. 8, the smart card processing device 1 and the smart card 2 shall perform communication of information in the ultra-high-speed communication (at the speed V2). First, the smart card processing device 1 transmits a command to the smart card 2 at the speed V2 of the ultra-high-speed communication (Step S101). The smart card 2 performs reception processing which receives the command transmitted at the speed V2 of the ultra-high-speed communication from the smart card processing device 1 (Step S102).

When the control element 21 of the smart card 2 cannot receive the command from the smart card processing device 1 in the reception processing, or when the control element 21 of the smart card 2 cannot perform a command processing because of defect of the data received (Step S102), the control element 21 of the smart card 2 judges that error processing for the ultra-high-speed communication is performed. In the processing example shown in Fig. 8, the control element 21 of the smart card 2 shall choose one error processing out of three kinds of error processing and perform the chosen error processing. However, as for an operation, the processing may be set up beforehand so that one of the error processing is performed.

When the control element 21 judged that the first error processing is performed (Step S103, YES), the control element 21 returns the communication speed to the speed (the first speed V1, for example) before changing to the speed V2 of the ultra-high-speed communication (Step S104). The smart card 2 which performs the first error processing shall store the speed V1 before change to the RAM etc. when changing the communication speed to the speed V2 of the ultra-high-speed communication. Upon returning the communication speed to the speed V1 before changing to the speed V2 of the ultra-high-speed communication, the control element 21 transmits the error notice which shows a communication error including the information which shows the speed V1 after change to the smart card processing device 1 at the speed V1 after change (Step S105).

Moreover, when the control element 21 judged that the second error processing is performed (Step S106, YES), the control element 21 changes the communication speed into the speed (a third speed V3, for example) slower than the speed V1 before changing to the speed V2 of the ultra-high-speed communication (Step S107). Moreover, when the smart card 2 changes the communication speed to the speed V2 of the ultra-high speed communication, the smart card 2 shall store the speed V1 before change or the speed V3 slower than the speed V1 before change to the RAM etc.

When the control element 21 changed the communication speed into the speed V3 slower than the speed V1 before changing to the speed V2 of the ultra-high-speed communication, the control element 21 transmits the communication error including the information which shows the speed V3 after change to the smart card processing device 1 at the speed V3 after change (Step S108). The control element 21 may be set so as to choose a speed (a fourth speed V4, for example) faster next than the speed V2 of the ultra-high-speed communication.

When the control element 21judged that the third error processing is performed (Step S109, YES), the control element 21 changes the communication speed for communication with the smart card processing device 1 into a speed V0 of the initial response (Step S110). When changing the communication speed to the speed V0 of the initial response, the control element 21 transmit a communication error including the information which shows the speed V0 after change to the smart card processing device 1 at the speed V0 after change (the speed of the initial response) (Step S111).

When receiving the error notice from the smart card 2, the smart card processing device 1 changes the communication speed to the speed after change which the smart card 2 showed by the error notices (Step S105, Step S108 or Step 111) concerned (Step S112). When the smart card processing device 1 changes the communication speed according to the error notices from the smart card 2, the smart card processing device 1 and the smart card 2 exchange a command and a response at the speed after change.

When the speed V2 of the ultra-high-speed communication is set up in the initial setting, the smart card 2 cannot perform the first and the second error processing because the speed before changing to the speed V2 of the ultra-high-speed communication is unfixed. In this case, the smart card 2 may perform the third error processing mentioned above, or change the communication speed to an arbitrary speed (the fourth speed V4, for example) slower than the speed V2 of the ultra-high-speed communication.

Moreover, even when the smart card 2 detects the communication error, the smart card 2 may change the communication speed based on the directions from the smart card processing device 1. In this case, the smart card 2 skips Step S104, and sends the error notice at the speed V2 of the ultra-high-speed communication. After sending the error notice, the smart card 2 may return the communication speed to the speed V1 before changing to the ultra-high-speed communication, the speed V3 slower than the speed V2 of the ultra-high-speed communication, or the speed V0 of the initial response according to the directions from the smart card processing device 1.

Moreover, the smart card processing device 1 may include a means to measure a transmission speed of the data received from the smart card 2. In this case, the smart card 2 does not need to disclose the speed after change to the smart card processing device in the error notice.

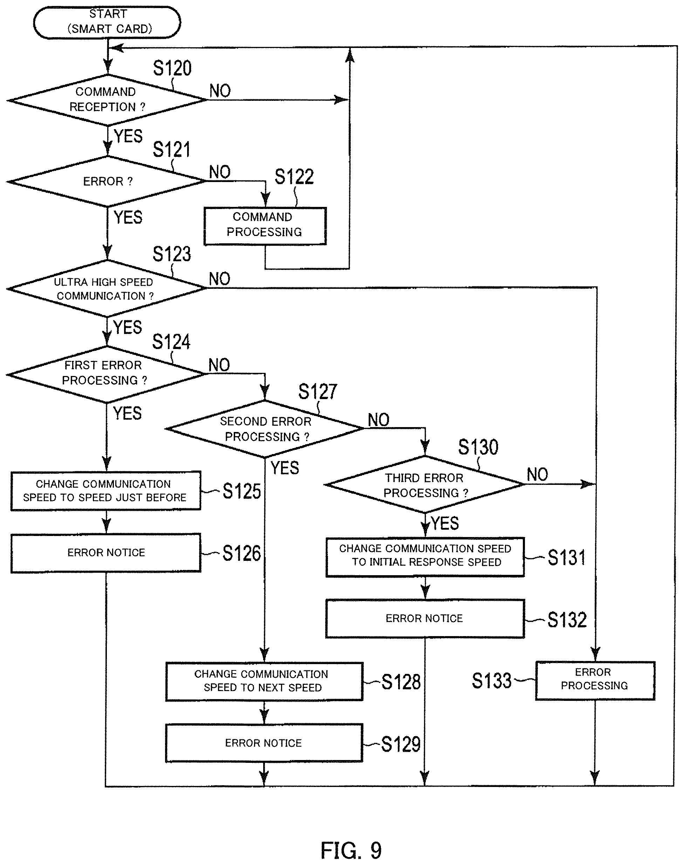

Next, an operation of the smart card 2 which performs the error processing at the time of the ultra-high-speed communication mentioned-above is explained. Fig. 9 is a flow chart for explaining a flow of the processing in the smart card 2 which performs the error processing at the time of the ultra-high-speed communication. Here, the smart card 2 shall be in a state where it has changed the communication speed to the speed V2 of the ultra-high-speed communication from another speed (the first speed V1, for example), and that the smart card 2 shall be in a state where it is waiting for a command from the smart card processing device 1 (Step S120). Upon receiving the command at the speed V2 of the ultra-high-speed communication from the smart card processing device 1, the smart card 2 judges whether a communication error occurred in reception processing (Step S121). When the smart card 2 judged that the error has not occurred (Step S121, NO), the control element 21 performs the received command and waits for a next command.

For example, when the control element 21 could not receive the whole command from the smart card processing device 1, or when the control element 21 could not execute the command because of the defect of the received data, the control element 21 judges that the communication error occurred. When the control element 21 judges that the communication error occurred in the reception processing of the command from the smart card processing device 1 (Step S121, YES) and the control element 21 is communicating at the speed V2 of the ultra-high-speed communication (Step S123, YES), the control element 21 chooses one error processing from the error processing for the ultra-high-speed communication (Step S124, S127, S130).

For example, when the control element 21 chooses the first error measure (Step S124, YES), the control element 21 returns the communication speed to the speed V1 before changing to the speed V2 of the ultra-high-speed communication (Step S125). In this case, the information which shows the speed V1 before changing to the speed V2 of the ultra-high-speed communication shall be stored by the RAM etc. When the control element 21 returns the communication speed to the speed V1 before changing to the speed V2 of the ultra-high-speed communication, the control element 21 transmits the error notice which shows the communication error including the information showing the speed V1 after change to the smart card processing device 1 (Step S126), and waits for a next command at the speed V1 after change.

Moreover, when the control element 21 chooses the second error measure (Step S127, YES), the control element 21 changes the communication speed to the speed V3 slower than the speed V1 before changing to the speed V2 of the ultra-high-speed communication (Step S128). In this case, the information showing the speed V1 before changing to the speed V2 of the ultra-high-speed communication also shall be stored by the RAM etc. Changing the communication speed to the speed V3 slower than the speed V1 before changing to the speed V2 of the ultra-high-speed communication, the control element 21 transmits the communication error including the information which shows the speed V3 after change to the smart card processing device 1 (Step S129), and waits for a next command at the speed V3 after change.

Moreover, when the control element 21 chooses the third error processing (Step S130, YES), the control element 21 changes the communication speed with the smart card processing device 1 to the speed V0 of the initial response (or the speed VL of the lowest speed which is supported) (Step S131). Upon changing the communication speed to the speed V0 of the initial response, the control element 21 transmits the communication error including the information which shows the speed V0 of the initial response to the smart card processing device 1 (Step S132), and waits for a next command at the speed V0 of the initial response.

When the control element 21 judges that the communication error occurred in the reception processing of the command from the smart card processing device 1 (Step S121, YES), and the control element 21 is not communicating at the speed V2 of the ultra-high-speed communication (Step S123, NO), the control element 21 1 performs usual error processing (Step S133). However, even when the control element 21 is not communicating at the speed of the ultra-high-speed communication, the control element 21 may change the communication speed to a speed slower than the current speed, and may return the error notice which shows the speed after change to the smart card processing device 1. Thereby, the smart card 2 can continue the communication by slowing down the communication speed when the communication error occurs even when the smart card 2 is not communicating at the speed of the ultra-high-speed communication.

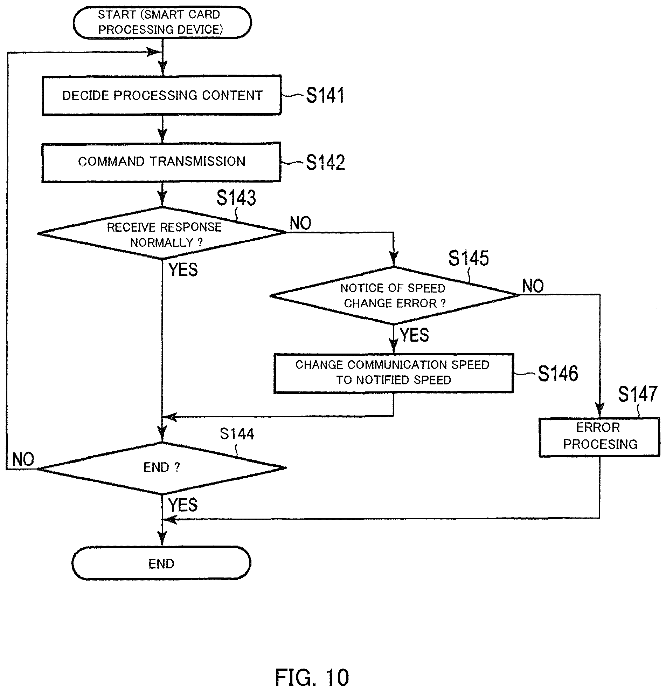

Next, an operation of the smart card processing device 1 which performs the error processing at the time of the ultra-high-speed communication mentioned above is explained. Fig. 10 is a flow chart for explaining a flow of the processing in the smart card processing device 1 which performs the error processing at the time of the ultra-high-speed communication. Here, the smart card processing device 1 shall perform the ultra-high-speed communication with the smart card 2. The control section 10 of the smart card processing device 1 determines contents of processing to perform next (Step S141) when the control section 10 of the smart card processing device 1 becomes in the state which it can transmit a command. When the control section 10 determines the contents of processing, the control section 10 creates a command according to the contents of processing determined, and transmits the created command to the smart card 2 at the speed of the ultra-high-speed communication (Step S142).

The control section 10 of the smart card processing device 1 receives a response from the smart card after transmitting the command. For example, when the control section 10 has received a normal response from the smart card 2 (Step S143, YES) and has not ended a communication with the smart card 2 concerned (Step S144, NO), the control section 10 returns to the above-mentioned step S141 and performs a next processing. Moreover, when the control section 10 could not receive the normal response (Step S143, NO), the control section 10 judges whether the error notice containing a change notice of the communication speed is received (Step S145).

When the control section 10 judges that the error notice containing the change notice of the communication speed is received (Step S145, YES), the control section 10 changes the communication speed setting to the speed after change contained in the error notice (Step S146). After changing the communication speed setting, the control section 10 returns to Step S142 and retransmits the command which resulted in the communication error at the speed after change (Step S142). When the control section 10 detects an usual error such as no response (Step S145, NO), the control section 10 performs the usual error processing (Step S147) and ends the communication with the smart card 2.

According to the above embodiments, the smart card and the smart card processing device can change the communication speed even after establishing the communication speed in the initial setting. Moreover, when changing the communication speed, the smart card and the smart card processing device exchange a small amount of information than the amount of information of an actual command or response, thereby the smart card and the smart card processing device can check a transmitting and receiving situation of the information at the speed after change.

According to the embodiment, when the smart card and the smart card processing device fail in the data communication at the speed of the ultra-high-speed communication, the smart card and the smart card processing device can change the communication speed to a speed slower than the speed of the ultra-high-speed communication without performing the initial setting again, and can continue transmission of information at a speed with an highly stable.

While a certain embodiment has been described, the embodiment has been presented by way of example only, and is not intended to limit the scope of the inventions.

## Claims

1. A portable electronic device (2) comprising:
a communication section (25) which communicates with an external device (1); and
a control section (21);
wherein the control section (21) sets up a first speed as a communication speed which is used for communication between the communication section (25) and the external device (1), and
the communication section (25) communicates with the external device (1) at the first speed,
wherein when a change request which requests change of the communication speed from the external device (1) is received by the communication section (25) at the first speed, the control section (21)
changes the communication speed from the first speed to a second different speed specified by the change request,
**characterized in that**
after changing the communication speed from the first speed to the second speed, the communication section (25) receives check data with an error detection code transmitted from the external device (1) at the second speed and the control section (21) checks
a receiving result of the check data using the error detection code and notifies the receiving result of the check
data to the external device (1) at the second speed by the communication section (1).

2. The portable electronic device (2) according to the claim 1, wherein the second speed is faster than the first speed.

3. The portable electronic device (2) according to the claim 1, wherein when the control section (21) does not receive the command normally by the communication section (25), the control section (21) changes the communication speed to a speed slower than the second speed set up.

4. The portable electronic device (2) according to claim 1, wherein when the control section (21) does not receive the command normally by the communication section (25), the control section (21) returns the communication speed to the first speed from the second speed.

5. The portable electronic device (2) according to claim 1, wherein when the control section (21) does not receive the command normally by the communication section (25), the control section (21) changes the communication speed from the second speed to a speed used in the initial setting.

6. The portable electronic device (2) according to claim 1, wherein the portable electronic device (2) is a smart card (2).

7. The portable electronic device (2) according to claim 6, wherein the smart card (2) includes:
a main body (C); and
a module (M) arranged in the main body (C);
wherein the module (M) includes the communication section (25) and the control section (21).

8. A system comprising a portable electronic device (2) according to claim 7 and a smart card processing device (1), wherein the external device (1) is a smart card processing device (1), the smart card processing device (1) including:
a communication section (15) which communicates with the smart card (2); and
a control section (10);
wherein the control section (10) sets up the first speed as the communication speed used for communication between the communication section (15) and the smart card (2),
wherein the control section (10) transmits the change request which requests change of communication speed to the smart card by the communication section (15), and the communication
section (15) communicates with the smart card (2)
at the first speed,
wherein when a response showing acceptance of the change request of communication speed from the smart card is received at
the first speed, the control section (10) changes the communication speed from the first speed to the second speed specified by the change request.

9. The system according to claim 8,
wherein when the control section (10) of the processing device receives the response showing acceptance of change of the communication speed from the smart card, the control
section (10) of the processing device transmits check data for checking the communication situation to the smart card (2) at the second speed, and
wherein when the control section (10) of the processing device receives a response which shows that the check data received normally from the smart card (2), the control section (10) of the processing device fixes the change of the communication speed.

## Patentansprüche

1. Tragbare elektronische Vorrichtung (2), umfassend:
einen Kommunikationsabschnitt (25), der mit einer externen Vorrichtung (1) kommuniziert; und
einen Steuerabschnitt (21);
wobei der Steuerabschnitt (21) eine erste Geschwindigkeit als eine Kommunikationsgeschwindigkeit einrichtet, die zur Kommunikation zwischen dem Kommunikationsabschnitt (25) und der externen Vorrichtung (1) verwendet wird, und der Kommunikationsabschnitt (25) mit der externen Vorrichtung (1) mit der ersten Geschwindigkeit kommuniziert,
wobei, wenn eine Änderungsanfrage, die eine Änderung der Kommunikationsgeschwindigkeit anfragt, von der externen Vorrichtung (1) durch den Kommunikationsabschnitt (25) mit der ersten Geschwindigkeit empfangen wird, der Steuerabschnitt (21) die Kommunikationsgeschwindigkeit von der ersten Geschwindigkeit zu einer zweiten, unterschiedlichen Geschwindigkeit ändert, die durch die Änderungsanfrage spezifiziert ist,
**dadurch gekennzeichnet, dass**
nach dem Ändern der Kommunikationsgeschwindigkeit von der ersten Geschwindigkeit zu der zweiten Geschwindigkeit der Kommunikationsabschnitt (25) Prüfdaten mit einem Fehlererkennungscode empfängt, die von der externen Vorrichtung (1) mit der zweiten Geschwindigkeit übertragen werden, und der Steuerabschnitt (21) ein Empfangsergebnis der Prüfdaten unter Verwendung des Fehlererkennungscodes prüft und die externe Vorrichtung (1) über das Empfangsergebnis der Prüfdaten mit der zweiten Geschwindigkeit durch den Kommunikationsabschnitt (1) benachrichtigt.

2. Tragbare elektronische Vorrichtung (2) nach Anspruch 1, wobei die zweite Geschwindigkeit schneller als die erste Geschwindigkeit ist.

3. Tragbare elektronische Vorrichtung (2) nach Anspruch 1, wobei, wenn der Steuerabschnitt (21) den Befehl nicht normal durch den Kommunikationsabschnitt (25) empfängt, der Steuerabschnitt (21) die Kommunikationsgeschwindigkeit zu einer Geschwindigkeit ändert, die langsamer als die eingerichtete zweite Geschwindigkeit ist.

4. Tragbare elektronische Vorrichtung (2) nach Anspruch 1, wobei, wenn der Steuerabschnitt (21) den Befehl nicht normal durch den Kommunikationsabschnitt (25) empfängt, der Steuerabschnitt (21) die Kommunikationsgeschwindigkeit zu der ersten Geschwindigkeit von der zweiten Geschwindigkeit zurückführt.

5. Tragbare elektronische Vorrichtung (2) nach Anspruch 1, wobei, wenn der Steuerabschnitt (21) den Befehl nicht normal durch den Kommunikationsabschnitt (25) empfängt, der Steuerabschnitt (21) die Kommunikationsgeschwindigkeit von der zweiten Geschwindigkeit zu einer Geschwindigkeit ändert, die in der Ausgangseinstellung verwendet wurde.

6. Tragbare elektronische Vorrichtung (2) nach Anspruch 1, wobei die tragbare elektronische Vorrichtung (2) eine Chipkarte (2) ist.

7. Tragbare elektronische Vorrichtung (2) nach Anspruch 6, wobei die Chipkarte (2) aufweist:
einen Hauptkörper (C); und
ein Modul (M), das in dem Hauptkörper (C) angeordnet ist;
wobei das Modul (M) den Kommunikationsabschnitt (25) und den Steuerabschnitt (21) aufweist.

8. System, umfassend eine tragbare elektronische Vorrichtung (2) nach Anspruch 7 und eine Chipkarten-Verarbeitungsvorrichtung (1), wobei die externe Vorrichtung (1) eine Chipkarten-Verarbeitungsvorrichtung (1) ist, wobei die Chipkarten-Verarbeitungsvorrichtung (1) aufweist:
einen Kommunikationsabschnitt (15), der mit der Chipkarte (2) kommuniziert; und
einen Steuerabschnitt (10);
wobei der Steuerabschnitt (10) eine erste Geschwindigkeit als eine Kommunikationsgeschwindigkeit einrichtet, die zur Kommunikation zwischen dem Kommunikationsabschnitt (15) und der Chipkarte (2) verwendet wird,
wobei der Steuerabschnitt (10) die Änderungsanfrage, die eine Änderung der Kommunikationsgeschwindigkeit anfragt, durch den Kommunikationsabschnitt (15) an die Chipkarte überträgt und der Kommunikationsabschnitt (15) mit der Chipkarte (2) mit der ersten Geschwindigkeit kommuniziert,
wobei, wenn eine Antwort, die eine Akzeptanz der Änderungsanfrage der Kommunikationsgeschwindigkeit zeigt, von der Chipkarte mit der ersten Geschwindigkeit empfangen wird, der Steuerabschnitt (10) die Kommunikationsgeschwindigkeit von der ersten Geschwindigkeit zu der zweiten Geschwindigkeit ändert, die durch die Änderungsanfrage spezifiziert ist.

9. System nach Anspruch 8,
wobei, wenn der Steuerabschnitt (10) der Verarbeitungsvorrichtung die Antwort, die eine Akzeptanz der Änderung der Kommunikationsgeschwindigkeit zeigt, von der Chipkarte empfängt, der Steuerabschnitt (10) der Verarbeitungsvorrichtung Prüfdaten zum Prüfen der Kommunikationssituation an die Chipkarte (2) mit der zweiten Geschwindigkeit überträgt, und
wobei, wenn der Steuerabschnitt (10) der Verarbeitungsvorrichtung eine Antwort empfängt, die zeigt, dass die Prüfdaten normal von der Chipkarte (2) empfangen wurden, der Steuerabschnitt (10) der Verarbeitungsvorrichtung die Änderung der Kommunikationsgeschwindigkeit behebt.

## Revendications

1. Dispositif électronique portable (2) comprenant :
une section de communication (25) qui communique avec un dispositif externe (1) ; et
une section de commande (21) ;
dans lequel la section de commande (21) établit une première vitesse en tant que vitesse de communication qui est utilisée pour une communication entre la section de communication (25) et le dispositif externe (1), et la section de communication (25) communique avec le dispositif externe (1) à la première vitesse,
dans lequel quand une demande de changement qui demande un changement de la vitesse de communication provenant du dispositif externe (1) est reçue par la section de communication (25) à la première vitesse, la section de commande (21) change la vitesse de communication de la première vitesse à une seconde vitesse différente spécifiée par la demande de changement,
**caractérisé en ce que**
après le changement de la vitesse de communication de la première vitesse à la seconde vitesse, la section de communication (25) reçoit des données de vérification avec un code de détection d'erreur transmis à partir du dispositif externe (1) à la seconde vitesse et la section de commande (21) vérifie un résultat de réception des données de vérification en utilisant le code de détection d'erreur et notifie le résultat de réception des données de vérification au dispositif externe (1) à la seconde vitesse par la section de communication (1).

2. Dispositif électronique portable (2) selon la revendication 1, dans lequel la seconde vitesse est plus rapide que la première vitesse.

3. Dispositif électronique portable (2) selon la revendication 1, dans lequel quand la section de commande (21) ne reçoit pas la commande normalement par la section de communication (25), la section de commande (21) change la vitesse de communication à une vitesse plus lente que la seconde vitesse établie.

4. Dispositif électronique portable (2) selon la revendication 1, dans lequel quand la section de commande (21) ne reçoit pas la commande normalement par la section de communication (25), la section de commande (21) ramène la vitesse de communication de la seconde vitesse à la première vitesse.

5. Dispositif électronique portable (2) selon la revendication 1, dans lequel quand la section de commande (21) ne reçoit pas la commande normalement par la section de communication (25), la section de commande (21) change la vitesse de communication de la seconde vitesse à une vitesse utilisée dans la configuration initiale.

6. Dispositif électronique portable (2) selon la revendication 1, dans lequel le dispositif électronique portable (1) est une carte à puce intelligente (2).

7. Dispositif électronique portable (2) selon la revendication 6, dans lequel la carte à puce intelligente (2) comprend :
un corps principal (C) ; et
un module (M) agencé dans le corps principal (C) ;
dans lequel le module (M) comprend la section de communication (25) et la section de commande (21).

8. Système comprenant un dispositif électronique portable (2) selon la revendication 7 et un dispositif de traitement de carte à puce intelligente (1), dans lequel le dispositif externe (1) est un dispositif de traitement de carte à puce intelligente (1), le dispositif de traitement de carte à puce intelligente (1) comprenant :
une section de communication (15) qui communique avec la carte à puce intelligente (2) ; et
une section de commande (10) ;
dans lequel la section de commande (10) établit la première vitesse en tant que vitesse de communication utilisée pour une communication entre la section de communication (15) et la carte à puce intelligente (2),
dans lequel la section de commande (10) transmet la demande de changement qui demande un changement de vitesse de communication à la carte à puce intelligente par la section de communication (15), et la section de communication (15) communique avec la carte à puce intelligente (2) à la première vitesse,
dans lequel quand une réponse indiquant l'acceptation de la demande de changement de vitesse de communication provenant de la carte à puce intelligente est reçue à la première vitesse, la section de commande (10) change la vitesse de communication de la première vitesse à la seconde vitesse spécifiée par la demande de changement.

9. Système selon la revendication 8,
dans lequel quand la section de commande (10) du dispositif de traitement reçoit la réponse indiquant l'acceptation d'un changement de vitesse de communication à partir de la carte à puce intelligente, la section de commande (10) du dispositif de traitement transmet des données de vérification pour vérifier la situation de communication de la carte à puce intelligente (2) à la seconde vitesse, et
dans lequel quand la section de commande (10) du dispositif de traitement reçoit une réponse qui indique que les données de vérification sont reçues normalement à partir de la carte à puce intelligente (2), la section de commande (10) du dispositif de traitement fixe le changement de la vitesse de communication.
